# EUROPÄISCHE PATENTSCHRIFT

(11) **EP 2 753 475 B1**
(45) Veröffentlichungstag und Bekanntmachung des Hinweises auf die Patenterteilung: **09.12.2020**
(21) Anmeldenummer: 12754027.6
(22) Anmeldetag: 07.09.2012
(51) Int. Cl.: B60B 39/04, B60T 8/17, B61C 15/10, B61H 11/00

(54) **VERFAHREN ZUM AUFTRAGEN EINES ADHÄSIONSSTEIGERNDEN MITTELS AUF EINE SCHIENE**
METHOD FOR APPLYING AN ADHESION-PROMOTING PRODUCT TO A RAIL
PROCÉDÉ POUR APPLIQUER UNE SUBSTANCE AUGMENTANT L'ADHÉRENCE SUR UN RAIL

(30) Priorität: 09.09.2011 DE 102011113071
(43) Veröffentlichungstag der Anmeldung: 16.07.2014
(73) Patentinhaber: KNORR-BREMSE Systeme für Schienenfahrzeuge GmbH, 80809 München (DE)
(72) Erfinder: HERDEN, Marc-Oliver, 81377 München (DE); RAU, Rainer, 82538 Geretsried (DE)
(86) Internationale Anmeldenummer: PCT/EP2012/067520
(87) Internationale Veröffentlichungsnummer: WO 2013/034696

(56) Entgegenhaltungen:
- EP-A1- 2 147 840
- GB-A- 1 007 126
- US-A1- 2008 059 112

## Beschreibung

Die Erfindung betrifft ein Verfahren zum Auftragen eines adhäsionssteigernden Mittels auf eine Schiene, eine Steuervorrichtung zur Durchführung des angegebenen Verfahrens und ein Schienenfahrzeug mit der Steuervorrichtung.

Aus der DE 600 26 290 T2 ist es bekannt geworden, auf eine Schiene ein Auftragen eines adhäsionssteigernden Mittels, um die Bremswirkung für ein auf der Schiene fahrendes Schienenfahrzeug zu verbessern.

Die US 2008/0059112 A1 offenbart ein Verfahren mit den Merkmalen des Oberbegriffs des Anspruchs 1. Die GB 1,007,126 offenbart eine Lokomotive mit zwei Dosiereinrichtungen pro Rad, um Sand auf eine Schiene aufzutragen.

Es ist Aufgabe der vorliegenden Erfindung die Auftragung adhäsionssteigernder Mittel zu verbessern.

Die Aufgabe wird durch die Merkmale der unabhängigen Ansprüche gelöst. Bevorzugte Weiterbildungen sind Gegenstand der abhängigen Ansprüche.

Gemäß einem Aspekt der Erfindung umfasst ein Verfahren zum Auftragen eines adhäsionssteigernden Mittels auf eine Schiene die Schritte:
- Auftragen des adhäsionssteigernden Mittels aus einer ersten Dosiereinrichtung, die an ein auf der Schiene fahrendes Schienenfahrzeug über der Schiene und in Fahrtrichtung des Schienenfahrzeuges betrachtet vor einem auf der Schiene fahrenden Rades des Schienenfahrzeug es angeordnet ist,
- Messen eines Adhäsionswertes des Rades auf der Schiene, und
- zusätzliches Auftragen des adhäsionssteigernden Mittels aus einer über der Schiene angeordneten zweiten Dosiereinrichtung, wenn der Adhäsionswert einen vorbestimmten Schwellwert unterschreitet.

Dem angegebenen Verfahren liegt die Überlegung zugrunde, dass es eigentlich ausreichen sollte, auf Schiene mit einer einzigen Dosiereinrichtung ein adhäsionssteigerndes Mittel aufzutragen. Wenn diese einzige Dosiereinrichtung in Fahrtrichtung des Schienenfahrzeuges gesehen vor allen Rädern des Schienenfahrzeuges angeordnet ist, so sollte das von der einzigen Dosiereinrichtung aufgebrachte adhäsionssteigernde Mittel auf alle Räder die gleiche Adhäsionswirkung haben.

Im Rahmen des angegebenen Verfahrens wird jedoch erkannt, dass das adhäsionssteigernde Mittel nicht nur von den einzelnen Rädern des Schienenfahrzeuges beim Abbremsen des Schienenfahrzeuges verdrängt sondern auch durch Windverwehungen oder andere Einflüsse verdrängt werden könnte. Insofern könnte die Wirkung durch die Auftragung des adhäsionssteigernden Mittels in Abhängigkeit von der Entfernung eines Rades von einer das adhäsionssteigernde Mittel auftragenden Dosiereinrichtung nachlassen.

Zwar könnte jedem einzelnen Rad des Schienenfahrzeuges eine eigene Dosiereinrichtung zum Ausstreuen des adhäsionssteigernden Mittels zugeordnet werden, der technische und wirtschaftliche Aufwand zur Umsetzung dazu steigen jedoch in ungerechtfertigter Weise an.

Demgegenüber wird mit dem angegebenen Verfahren vorgeschlagen, mit einer einzigen Dosiereinrichtung eine Grundauftragung auf die Schiene aufzubringen und an einem Rad des Schienenfahrzeuges nach dieser einzigen Dosiereinrichtung zu prüfen, ob die mit der Grundauftragung verbundene adhäsionssteigernde Wirkung ausreicht, das Rad in einer gewünschten Wirkung abzubremsen. Sollte das nicht möglich sein, so wird mit dem angegebenen Verfahren vorgeschlagen mit einer anderen Dosiereinrichtung eine Nachauftragung auf die Schiene aufzubringen, um die gewünschte Bremswirkung herzustellen.

Auf diese Weise wird eine zusätzliche Auftragung an dem Rad nur dann durchgeführt, wenn diese auch wirklich notwendig ist, so dass sich das aufzutragende adhäsionssteigernde Mittel wirtschaftlicher und umweltschonender einsetzen lässt.

Das Verfahren kann prinzipiell auf jedes Rad am Schienenfahrzeug angewendet werden. Vorzugsweise sollte die die Grundauftragung auf die Schiene aufbringende Dosiereinrichtung in Fahrtrichtung des Schienenfahrzeuges betrachtet an vorderster Stelle angeordnet sein, was jedoch nicht zwingend notwendig ist.

In einer Weiterbildung des angegebenen Verfahrens ist die zweite Dosiereinrichtung in Fahrtrichtung des Schienenfahrzeuges betrachtet vor dem Rad angeordnet, so dass die mit der zweiten Dosiereinrichtung auf die Schiene aufgebrachte Nachauftragung ihre adhäsionssteigernde Wirkung auf das Rad entfalten kann.

In einer besonderen Weiterbildung des angegebenen Verfahrens ist die zweite Dosiereinrichtung zwischen der ersten Dosiereinrichtung und dem Rad angeordnet. Das heißt, dass die Nachauftragung in Fahrtrichtung des Schienenfahrzeuges betrachtet, nach der Grundauftragung durchgeführt wird, so dass die adhäsionssteigernde Wirkung auf das Rad optimal entfaltet werden kann.

In einer anderen Weiterbildung umfasst das angegebene Verfahren die Schritte:
- Erfassen eines Adhäsionswertes eines weiteren Rades, das zwischen der ersten Dosiereinrichtung und der zweiten Dosiereinrichtung angeordnet ist, und
- Dosieren des aus der ersten Dosiereinrichtung aufgetragenen adhäsionssteigernden Mittels derart, dass der erfasste Adhäsionswert einem Solladhäsionswert für das weitere Rad folgt.

Das heißt, dass die Grundauftragung derart durchgeführt wird, dass das weitere Rad, das nach der die Grundauftragung durchführenden Dosiereinrichtung angeordnet ist, mit einer gewünschten Bremswirkung abgebremst wird. Dem angegebenen Verfahren liegt darauf basierend die Überlegung zugrunde, eine Nachauftragung erst dann durchzuführen, wenn diese gewünschte Bremswirkung an einem auf das weitere Rad folgenden Rad unterschritten wird.

In einer noch besonderen Weiterbildung umfasst das angegebene Verfahren den Schritt:
- Dosieren des aus der zweiten Dosiereinrichtung ausgestreuten adhäsionssteigernden Mittels derart, dass der erfasste Adhäsionswert einem Solladhäsionswert für das Rad folgt.

Das heißt, dass die Nachauftragung auf eine gewünschte Bremswirkung am Rad angepasst wird.

In einer zusätzlichen Weiterbildung umfasst das angegebene Verfahren den Schritt:
- Abschalten der ersten Dosiereinrichtung, wenn ein Füllstand des adhäsionssteigernden Mittels in der ersten Dosiereinrichtung einen vorbestimmten Wert unterschreitet.

Auf diese Weise kann die zweite Dosiereinrichtung zur Grundauftragung herangezogen werden, so dass sich gegebenenfalls einheitliche Füllstandsniveaus in den einzelnen Dosiereinrichtungen erreichen lassen.

In einer besonderen Weiterbildung des angegebenen Verfahrens wird das Verhindern der Abschaltung der ersten Dosiereinrichtung basierend auf einem Fahrzustand und/oder einer Fahrbedingung des Schienenfahrzeuges durchgeführt.

Auf diese Weise kann verhindert werden, dass das Schienenfahrzeug in gefährlichen Verkehrssituationen, die vom Fahrzustand des Schienenfahrzeuges und/oder von den Fahrbedingungen für das Schienenfahrzeug abhängen können und in denen eine gewünschte Bremswirkung an allen Rädern des Schienenfahrzeuges zur Verfügung stehen sollte, auch verfügbar ist. Unter den Fahrzustand können alle Zustandsgrößen für das Schienenfahrzeug fallen, die die Fortbewegung des Schienenfahrzeugs beschreiben. Das können beispielsweise die Geschwindigkeit oder die Beschleunigung sein. Unter die Fahrbedingungen alle Wirkungen auf das Schienenfahrzeug fallen, die den Fahrzustand des Schienenfahrzeugs beeinflussen.

In einer alternativen Weiterbildung umfasst das angegebene Verfahren die Schritte:
- Gegenüberstellen eines Adhäsionswert des Rades und eines Adhäsionswertes eines weiteren Rades, das in Fahrtrichtung des Schienenfahrzeuges hinter dem Rad angeordnet ist, und
- Plausibilisieren einer Wirkung der ersten Dosiereinrichtung basierend auf einer Gegenüberstellung der beiden Adhäsionswerte.

Gemäß einem weiteren Aspekt der Erfindung ist eine Steuervorrichtung eingerichtet, eines der angegebenen Verfahren durchzuführen. Die Steuervorrichtung kann dabei insbesondere derart erweitert werden, dass sie eingerichtet ist, ein Verfahren gemäß einem der Unteransprüche durchzuführen.

In einer Weiterbildung der angegebenen Steuervorrichtung weist die angegebene Vorrichtung einen Speicher und einen Prozessor auf. Dabei ist das angegebene Verfahren in Form eines Computerprogramms in dem Speicher hinterlegt und der Prozessor zur Ausführung des Verfahrens vorgesehen, wenn das Computerprogramm aus dem Speicher in den Prozessor geladen ist.

Gemäß einem weiteren Aspekt der Erfindung umfasst ein Computerprogramm Programmcodemittel, um alle Schritte eines der angegebenen Verfahren durchzuführen, wenn das Computerprogramm auf einem Computer oder einer der angegebenen Vorrichtungen ausgeführt wird.

Gemäß einem weiteren Aspekt der Erfindung enthält ein Computerprogrammprodukt einen Programmcode, der auf einem computerlesbaren Datenträger gespeichert ist und der, wenn er auf einer Datenverarbeitungseinrichtung ausgeführt wird, eines der angegebenen Verfahren durchführt.

Gemäß einem weiteren Aspekt der Erfindung umfasst ein Schienenfahrzeug eine der angegebenen Steuervorrichtungen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
Fig. 1 ein auf einer Schiene fahrendes Schienenfahrzeug,
Fig. 2 das auf einer Schiene fahrende Schienenfahrzeug aus Fig. 1 in einer ersten Fahrsituation,
Fig. 3 das auf einer Schiene fahrende Schienenfahrzeug aus Fig. 1 in einer zweiten Fahrsituation, und
Fig. 4 das auf einer Schiene fahrende Schienenfahrzeug aus Fig. 1 in einer zweiten Fahrsituation zeigen.

In den Figuren werden gleiche technische Elemente mit gleichen Bezugszeichen versehen und nur einmal beschrieben.

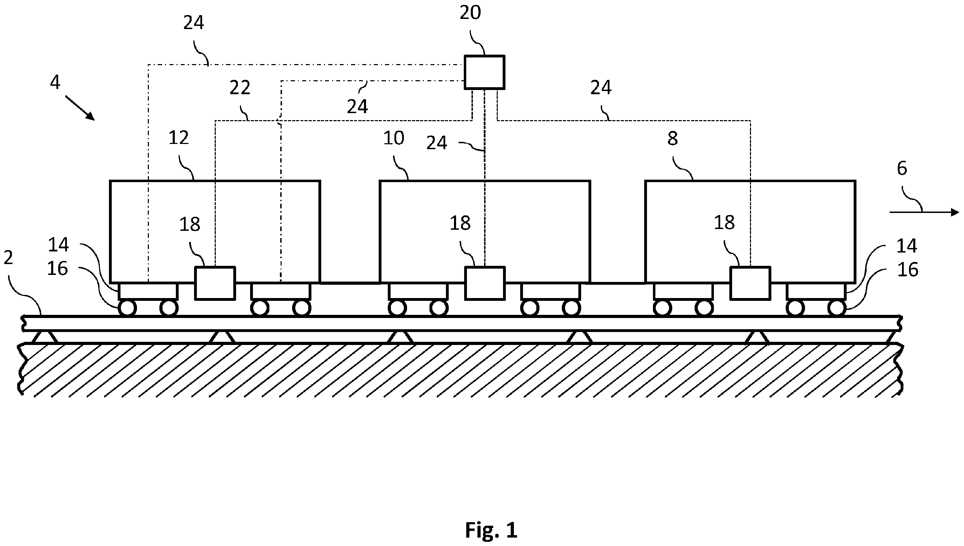

Es wird auf Fig. 1 Bezug genommen, ein auf einer Schiene 2 fahrendes Schienenfahrzeug 4 zeigt.

Das Schienenfahrzeug 4 der Fig. 1 umfasst in der vorliegenden Ausführung entgegen einer Fahrtrichtung 6 des Schienenfahrzeuges 4 gesehen einen ersten Wagen 8, der an einen zweiten Wagen 10 gekoppelt ist, wobei der zweite Wagen 10 wiederrum an einen dritten Wagen 12 gekoppelt ist.

An jedem Wagen sind in der vorliegenden Ausführung je zwei Drehgestelle 14 angeordnet, an denen je zwei nicht weiter dargestellte Radachsen aufgehängt sind. An den Radachsen werden Räder 16. Von den Drehgestellen 14 und den Rädern 16 sind in Fig. 1 der Übersichtlichkeit halber nur einige mit einem Bezugszeichen versehen.

Im Falle eines Abbremsens des Schienenfahrzeuges 4 können aus an den Wagen 8 bis 12 angeordneten Dosiereinrichtungen 18 adhäsionssteigernde Mittel auf die Schiene 2 aufgetragen werden. In der vorliegenden Ausführung soll das adhäsionssteigernde Mittel ein adhäsionssteigerndes Streugut beispielsweise in Form von Sand sein, das auf die Schiene 2 ausgestreut wird. Dazu ist eine Steuervorrichtung 20 vorgesehen, die die Dosiereinrichtungen 18 basierend auf Steuersignalen 22 ansteuert und dazu Messsignale 24, wie beispielsweise an den Rädern 16 vorherrschenden Adhäsionswerten zur Schiene 2 empfangen kann.

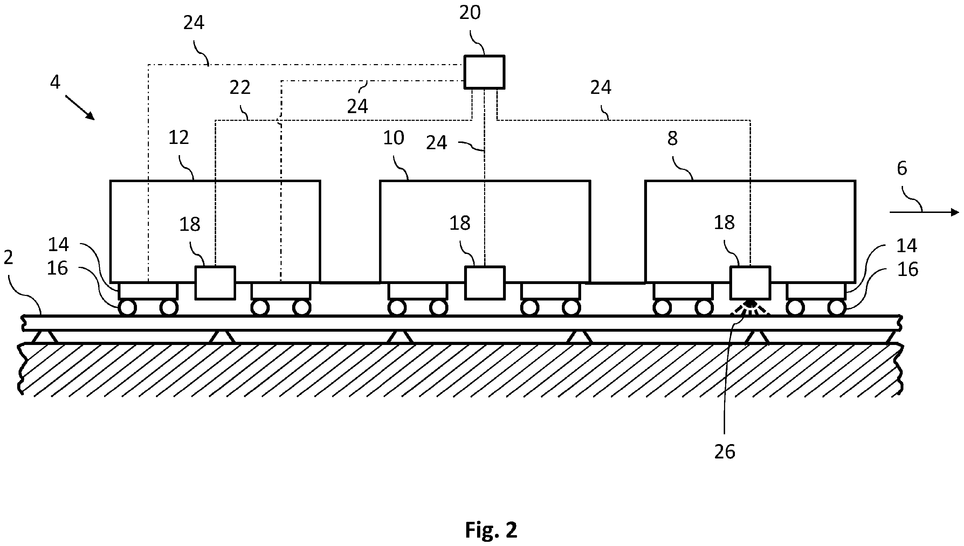

Es wird auf Fig. 2 bis 4 Bezug genommen, die das auf einer Schiene 2 fahrende Schienenfahrzeug 4 aus Fig. 1 in verschiedenen Fahrsituationen zeigt.

Sollte das Schienenfahrzeug 4 abgebremst werden, kann zunächst die Dosiereinrichtung 18 des ersten Wagens 8 aktiviert werden. Das somit auf die Schiene 2 aufgestreute adhäsionssteigernde Streugut 26 steigert damit in Fahrtrichtung 6 des Schienenfahrzeuges 4 betrachtet die Adhäsionswirkung zwischen der Schiene und den Rädern 16, die nach dieser Dosiereinrichtung 18 angeordnet sind.

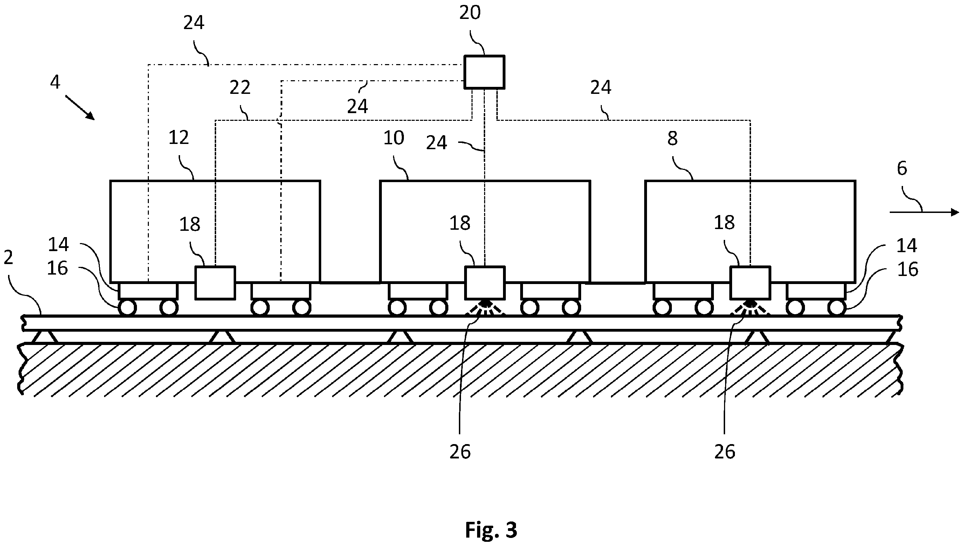

Zur Durchführung des angegebenen Verfahrens wird in der vorliegenden Ausführung zunächst als Messsignal 24 der Adhäsionswert der Räder 16 des dritten Wagens 12 erfasst. Sinkt dieser Adhäsionswert unter eine bestimmte Schwelle, dann wird in der vorliegenden Ausführung beispielhaft, wie in Fig. 3 gezeigt, die Dosiereinrichtung 18 des zweiten Wagens 10 aktiviert, um die Adhäsionswirkung zwischen den Rädern des dritten Wagens 12 und der Schiene 2 weiter zu steigern.

Sollte der Adhäsionswert dann immer noch nicht ausreichen, so kann in der vorliegenden Ausführung, wie nicht weiter dargestellt, auch die Dosiereinrichtung 18 des dritten Wagens 12 aktiviert werden, um die die Adhäsionswirkung zwischen den Rädern 16 des dritten Wagens 12 und der Schiene 2 weiter zu steigern.

Das Ausstreuen des Streugutes 26 aus einer Dosiereinrichtung 18 kann dabei bevorzugt in der Weise erfolgen, dass eine Adhäsionswirkung der Räder 16 erfasst wird, die in Fahrtrichtung 6 des Schienenfahrzeuges betrachtet am Wagen 8 bis 12 hinter der das Streugut 26 ausstreuenden Dosiereinrichtung 18 angeordnet sind. Für diese Adhäsionswirkung kann beispielsweise ein Solladhäsionswert vorgegeben werden, der mit dem Ausstreuen des Streugutes 26 erreicht werden muss.

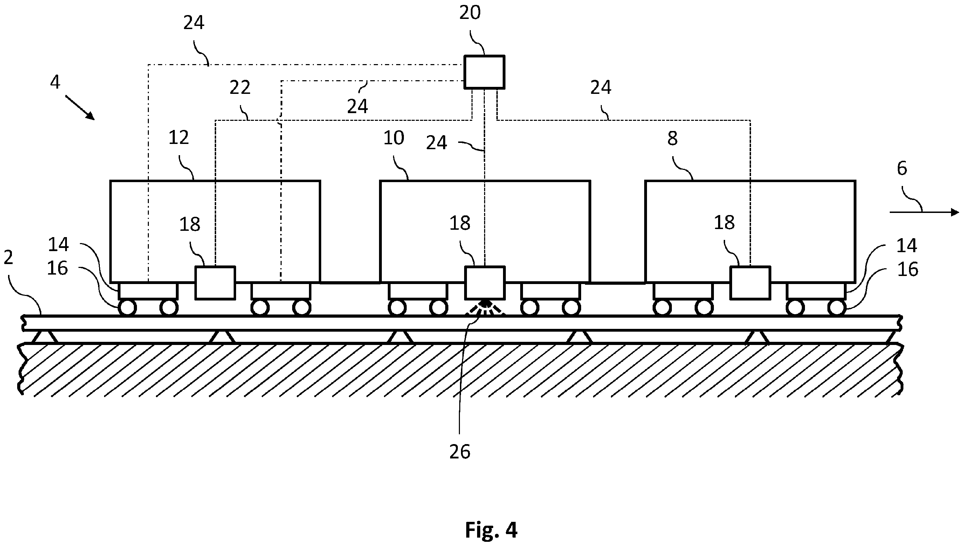

Sollte ferner in einer das Streugut 26 ausstreuenden Dosiereinrichtung 18 ein nicht weiter gezeigter Füllstand zu niedrig werden, kann die entsprechende Dosiervorrichtung 18 abgeschaltet werden. Die Erfassung des Füllstandes ist dabei nicht auf den absoluten Füllstand beschränkt, sondern kann auch relativ erfasst werden, indem zum Beispiel bei jeder Ausstreuung von Streugut eine maximale Menge an Streugut 26 zum Ausstreuen zugelassen wird. Auf diese Weise kann erreicht werden, dass in allen Dosiereinrichtungen immer ein im Wesentlichen gleicher Füllstand vorhanden ist. In Fig. 4 ist beispielhaft angedeutet, dass nur noch aus der Dosiereinrichtung 18 des zweiten Wagens 10 Streugut 26 ausgestreut wird, weil der Füllstand in der Dosiereinrichtung 18 des ersten Wagens 8 zu niedrig ist.

Das füllstandsabhängige Ausstreuen von Streugut 26 kann jedoch unter bestimmten Umständen unterbunden werden, wenn es beispielsweise eine Verkehrssituation nicht zulässt. Wie aus Fig. 4 ersichtlich, würde in Fahrtrichtung 6 des Schienenfahrzeuges 4 betrachtet nach Abschalten der Dosiereichrichtung 18 des ersten Wagens 8 keine adhäsionssteigernde Wirkung der hinteren Räder 16 des erstens Wagens 8 und der vorderen Räder 16 des zweiten Wagens 10 erreicht werden. Wetterabhängig oder auch abhängig von der Distanz zu einem nicht weiter dargestellten vorausfahrenden Schienenfahrzeug kann das füllstandsabhängige Ausstreuen von Streugut 26 dann unterbunden werden.

Um die Wirkung des ausgestreuten Streugutes 26 über das gesamte Schienenfahrzeug 4 hinweg zu erfassen, kann beispielsweise die Adhäsionswirkung an mehreren Rädern 16 des Schienenfahrzeuges erfasst und einander gegenübergestellt werden. Unter einer Gegenüberstellung soll dabei nachstehend ein Vergleich verstanden werden, ob die beiden verglichenen Adhäsionswirkungen, die beispielsweise in Form der Adhäsionswerte erfasst werden können, einer bestimmten Gesetzmäßigkeit, wie einer Kennlinie folgen. So kann beispielsweise überprüft werden, ob inwieweit die Adhäsionswirkung des aus der Dosiereinrichtung 18 des ersten Wagens 8 ausgestreuten Streugutes 26 über das Schienenfahrzeug 4, beispielsweise in Prozent, abnimmt. Ist die Abnahme der Adhäsionswirkung zu groß, kann auf ungünstige Bedingungen, wie beispielsweise Verwehungen des Streugutes 26 durch Winde geschlossen und entsprechend durch Zuschalten einer weiteren Dosiereinrichtung 18 reagiert werden.

## Patentansprüche

1. Verfahren zum Aufbringen eines adhäsionssteigernden Mittels (26) auf eine Schiene (2) umfassend:
- Auftragen eines adhäsionssteigernden Mittels (26) auf die Schiene (2) aus einer ersten Dosiereinrichtung (18), die an ein auf der Schiene (2) fahrendes Schienenfahrzeug (4) über der Schiene (2) und in Fahrtrichtung (6) des Schienenfahrzeuges (4) betrachtet vor einem auf der Schiene (2) fahrenden Rades (16) des Schienenfahrzeuges (4) angeordnet ist, Z **gekennzeichnet durch**
- Messen eines Adhäsionswertes (24) des Rades (16) auf der Schiene (2), und
- zusätzliches Auftragen des oder eines anderen adhäsionssteigernden Mittels (26) aus einer über der Schiene (2) angeordneten zweiten Dosiereinrichtung (18), wenn der Adhäsionswert (24) einen vorbestimmten Schwellwert unterschreitet.

2. Verfahren nach Anspruch 1, wobei die zweite Dosiereinrichtung (18) in Fahrtrichtung (6) des Schienenfahrzeuges (4) betrachtet vor dem Rad (16) angeordnet ist.

3. Verfahren nach Anspruch 1 oder 2, wobei die zweite Dosiereinrichtung (18) zwischen der ersten Dosiereinrichtung (18) und dem Rad (16) angeordnet ist.

4. Verfahren nach einem der vorstehenden Ansprüche, umfassend:
- Erfassen eines Adhäsionswertes (24) eines weiteren Rades (16), das zwischen der ersten Dosiereinrichtung (18) und der zweiten Dosiereinrichtung (18) angeordnet ist, und
- Dosieren des aus der ersten Dosiereinrichtung (18) aufgetragenen adhäsionssteigernden Mittels (26) derart, dass der erfasste Adhäsionswert (24) einem Solladhäsionswert für das weitere Rad (16) folgt.

5. Verfahren nach Anspruch 4, umfassend:
- Dosieren (22) des aus der zweiten Dosiereinrichtung (18) aufgetragenen adhäsionssteigernden Mittels (26) derart, dass der erfasste Adhäsionswert (24) einem Solladhäsionswert für das Rad (16) folgt.

6. Verfahren nach einem der vorstehenden Ansprüche, umfassend:
- Abschalten der ersten Dosiereinrichtung (18), wenn ein Füllstand des adhäsionssteigernden Mittels (26) in der ersten Dosiereinrichtung (18) einen vorbestimmten Wert unterschreitet.

7. Verfahren nach Anspruch 6, wobei das Verhindern der Abschaltung der ersten Dosiereinrichtung (18) basierend auf einem Fahrzustand und/oder einer Fahrbedingung des Schienenfahrzeuges (4) durchgeführt wird.

8. Verfahren nach einem der vorstehenden Ansprüche, umfassend:
- Gegenüberstellen eines Adhäsionswert (24) des Rades (16) und eines Adhäsionswertes (24) eines weiteren Rades (16), das in Fahrtrichtung (6) des Schienenfahrzeuges (4) hinter dem Rad (16) angeordnet ist,
- Plausibilisieren einer Wirkung des aus der ersten Dosiereinrichtung (18) aufgetragenen adhäsionssteigernden Mittels (26) basierend auf einer Gegenüberstellung der beiden Adhäsionswerte (24).

9. Steuervorrichtung (20), die ausgelegt ist, ein Verfahren nach einem der vorstehenden Ansprüche durchzuführen.

10. Schienenfahrzeug (4) umfassend eine Steuervorrichtung (20) nach Anspruch 9.

## Claims

1. Method for applying an adhesion-promoting product (26) to a rail (2) comprising:
- applying an adhesion-promoting product (26) to the rail (2) from a first metering device (18) which, as viewed above the rail (2) towards a rail vehicle (4) which is moving on the rail (2) and in the travelling direction (6) of the rail vehicle (4), is arranged in front of a wheel (16) of the rail vehicle (4), which wheel (16) is moving on the rail (2),
**characterised by**
- measuring an adhesion value (24) of the wheel (16) on the rail (2), and
- additionally applying the or another adhesion-promoting product (26) from a second metering device (18) which is arranged above the rail (2) if the adhesion value (24) undershoots a predefined threshold value.

2. Method according to claim 1, wherein the second metering device (18) is arranged in front of the wheel (16) as viewed in the travelling direction (6) of the rail vehicle (4).

3. Method according to claim 1 or 2, wherein the second metering device (18) is arranged between the first metering device (18) and the wheel (16).

4. Method according to any of the preceding claims, comprising:
- determining an adhesion value (24) of a further wheel (16) which is arranged between the first metering device (18) and the second metering device (18), and
- metering the adhesion-promoting product (26) which is applied from the first metering device (18) in such a way that the determined adhesion value (24) follows a setpoint adhesion value for the further wheel (16).

5. Method according to claim 4, comprising:
- metering (22) the adhesion-promoting product (26) which is applied from the second metering device (18) in such a way that the detected adhesion value (24) follows a setpoint adhesion value for the wheel (16).

6. Method according to any of the preceding claims, comprising:
- switching off the first metering device (18) if a filling level of the adhesion-promoting product (26) in the first metering device (18) undershoots a predefined value.

7. Method according to claim 6, wherein the prevention of switching off the first metering device (18) is carried out based on a driving state and/or a driving condition of the rail vehicle (4).

8. Method according to any of the preceding claims, comprising:
- the comparison of an adhesion value (24) of the wheel (16) and an adhesion value (24) of a further wheel (16) which is arranged behind the wheel (16) in the travelling direction (6) of the rail vehicle (4),
- the plausibility check of an effect of the adhesion-promoting product (26) which is applied from the first metering device (18) based on a comparison of the two adhesion values (24).

9. Control apparatus (20) designed to carry out a method according to any of the preceding claims.

10. Rail vehicle (4) comprising a control apparatus (20) according to claim 9.

## Revendications

1. Procédé d'application d'un agent (26) augmentant l'adhérence à un rail (2) comprenant :
- l'application d'un agent (26) augmentant l'adhérence au rail (2) à partir d'un premier dispositif (18) d'addition dosée, qui est monté, sur un véhicule (4) ferroviaire roulant sur le rail (2), au-dessus du rail (2) et, considéré dans le sens (6) de marche du véhicule (4) ferroviaire, avant une roue (16), roulant sur le rail (2), du véhicule (4) ferroviaire, **caractérisé par**
- la mesure d'une valeur (24) d'adhérence de la roue (16) au rail (2), et
- l'application supplémentaire du ou d'un autre agent (26) augmentant l'adhérence à partir d'un deuxième dispositif (18) d'addition dosée monté au dessus du rail (2), si la valeur (24) d'adhérence est inférieure à une valeur de seuil déterminée à l'avance.

2. Procédé suivant la revendication 1, dans lequel le deuxième dispositif (18) d'addition dosée est monté, considéré dans le sens (6) de marche du véhicule (4) ferroviaire, avant la roue (16) .

3. Procédé suivant la revendication 1 u 2, dans lequel le deuxième dispositif (18) d'addition dosée est monté entre le premier dispositif (18) d'addition dosée et la roue (16).

4. Procédé suivant l'une des revendications précédentes, comprenant :
- le relevé d'une valeur (24) d'adhérence d'une autre roue (16), qui est disposé entre le premier dispositif (18) d'addition dosée et le deuxième dispositif (18) d'addition dosée, et
- l'addition dosée de l'agent (26) augmentant l'adhérence, appliquée à partir du premier dispositif (18) d'addition dosée, de manière en ce que la valeur (24) d'adhérence relevée suive une valeur d'adhérence de consigne pour l'autre roue (16) .

5. Procédé suivant la revendication 4, comprenant :
- l'addition dosée (22) de l'agent (26) augmentant l'adhérence appliquée à partir du deuxième dispositif (19) d'addition dosée, de manière à ce que la valeur (24) d'adhérence relevée suive une valeur d'adhérence de consigne pour la roue (16).

6. Procédé suivant l'une des revendications précédentes, comprenant :
- l'arrêt du premier dispositif (18) d'addition dosée, si le niveau de l'agent (26), augmentant l'adhérence du premier dispositif (18) d'addition dosée, devient inférieure à une valeur déterminée à l'avance.

7. Procédé suivant la revendication 6, dans lequel on effectue l'arrêt du premier dispositif (18) d'addition dosée, sur la base d'un état de marche et/ou d'une condition de marche du véhicule (4) ferroviaire.

8. Procédé suivant l'une des revendications précédentes, comprenant :
- la confrontation d'une valeur (24) d'adhérence de la roue (16) et d'une valeur (24) d'adhérence d'une autre roue (16), qui est disposée dans le sens (6) de marche du véhicule (4) ferroviaire, derrière la roue (16),
- la considération de la vraisemblance d'un effet de l'agent (26) augmentant l'adhérence, appliqué à partir du premier dispositif (18) d'addition dosée, sur la base d'une confrontation des deux valeurs (24) d'adhérence.

9. Système (20) de commande, qui est conçu pour effectuer un procédé suivant l'une des revendications précédentes.

10. Véhicule (4) ferroviaire, comprenant un système (20) de commande suivant la revendication 9.
